# EUROPÄISCHE PATENTSCHRIFT

(11) **EP 3 644 038 B1**
(45) Veröffentlichungstag und Bekanntmachung des Hinweises auf die Patenterteilung: **28.12.2022**
(21) Anmeldenummer: 19020590.6
(22) Anmeldetag: 22.10.2019
(51) Int. Cl.: G01M 15/12, F02D 35/02, F02D 41/22, F02D 41/28

(54) **VERFAHREN ZUR WARTUNGSVORHERSAGE VON KOMPONENTEN EINER BRENNKRAFTMASCHINE MITTELS KÖRPERSCHALLSENSOR**
METHOD FOR PREDICTING THE MAINTENANCE OF COMPONENTS OF A COMBUSTION ENGINE BY MEANS OF A STRUCTURE-BORNE SOUND SENSOR
PROCÉDÉ DE PRÉDICTION DE LA MAINTENANCE DES COMPOSANTS D'UN MOTEUR À COMBUSTION INTERNE AU MOYEN DE CAPTEUR DE BRUITS SOLIDIENS

(30) Priorität: 24.10.2018 DE 102018126501
(43) Veröffentlichungstag der Anmeldung: 29.04.2020
(73) Patentinhaber: IAV GmbH, 10587 Berlin (DE)
(72) Erfinder: Lebendt, Thomas, 10369 Berlin (DE); Friedrich, Ingo, 14532 Kleinmachnow (DE); Mollik, Robert, 13187 Berlin (DE)
(74) Vertreter: Fukala, Georg

(56) Entgegenhaltungen:
- EP-A1- 3 095 992
- WO-A1-2015/052408
- WO-A1-2016/209522
- CA-A1- 2 609 718
- US-A1- 2016 103 038

## Beschreibung

### Technisches Gebiet

Die vorliegende Erfindung betrifft ein Verfahren zur Wartungsvorhersage von Komponenten einer Brennkraftmaschine, insbesondere eines Ventiltriebes, mittels Körperschallsensor gemäß dem Patentanspruch 1.

### Stand derTechnik

In Brennkraftmaschinen, bei denen Körperschallsensoren zur Steuerung des Zündzeitpunktes herangezogen werden, erfolgt diese in der rudimentärsten Ausführung durch die Aufnahme von Schwingungssignalen im Bereich des Brennraums, während des Zündvorgangs. Das Signal vom Körperschallsensor, welcher hierbei ein Klopfsensor ist, wird mit einem Referenzwert verglichen. Je nach Abweichung zu diesem Referenzwert wird der Zündzeitpunkt des Zylinders zeitlich verschoben. Es existieren weitere Anwendungen für Körperschall- bzw. Klopfsensoren in Brennkraftmaschinen im aktuellen Stand der Technik. So wird über die aufgenommenen Klopfsignale auf Fehlzündungen oder Bauteilbeschädigungen geschlossen. Bei Zweistoffmotoren, wie zum Beispiel Diesel-Gas-Zweistoffbetrieb, ist die Verwendung von Klopfsensoren zum Abgleich der Zündzeitpunkte der einzelnen Zylinder im Gasbetrieb von Vorteil. Weiterhin finden Klopfsensoren insbesondere bei Großmotoren Anwendung in der Verschleißerkennung, vorzugsweise für den Ventiltriebverschleiß.

In der Patentschrift DE3004605C2 wird ein Verfahren zur Messung des Ventilspiels einer Brennkraftmaschine vorgestellt, wobei ein akustisches Signal aus dem Brennraum der Brennkraftmaschine mit einem Klopfsensor aufgenommen wird. Das aufgenommene Signal wird in einem speziellen Messfenster ausgewertet und mit einem Referenzwert verglichen. Übersteigt der Messwert den Referenzwert, ist das Ergebnis einer elektronischen Auswertung dieser Differenz ein Indiz für ein zu großes Spiel des Ventiltriebes. Zur Verminderung des Rechenaufwandes und der Datenmenge wird das Messfenster zum Detektieren des Öffnungs- und/oder Schließgeräusches der Gaswechselventile nur in kritischen Zeitbereichen geöffnet. Das auszuwertende Signal ist hierbei die Amplitude einer Einzelfrequenz oder eines Frequenzspektrums innerhalb des Zeitbereiches. Die Zeitbereiche werden in der Art minimiert, dass Störsignale, wie das Klopfgeräusch der Brennkraftmaschine, ausgeblendet werden. Das Referenzsignal wird in einem Normalzustand des Ventilspiels aufgenommen und abgespeichert.

In der Patentschrift DE19917772B4 ist eine Ventilspielüberwachungseinrichtung offenbart, welche vorzugsweise auf selbstzündende Brennkraftmaschinen mit Common-Rail-Einspritztechnologie und ohne hydraulische Ventilspieleinstellung angewendet wird. Hierbei sind ein oder mehrere Klopfsensoren in einem oder mehreren Einspritzventilen angebracht. Die Signalaufnahme erfolgt ebenfalls in definierten Messfenstern, um Rechenzeit und den Einfluss von Störsignalen zu verringern. Die Messfenster schließen entsprechend die Schließvorgänge der Gaswechselventile ein, werden zyklisch in bestimmten Zeitintervallen aktiviert oder können in kritischen Betriebszuständen der Brennkraftmaschine zugeschaltet werden. Als kritische Betriebszustände der Brennkraftmaschine werden hierbei Kaltstart oder Volllastbetrieb genannt. Analog zum Stand der Technik werden innerhalb der Messfenster aufgenommene Daten bezüglich ihren Frequenzamplituden ausgewertet und mit vorher abgespeicherten Grenzwerten verglichen. Über eine elektronische Auswerteeinheit wird dabei das vorhandene Ventilspiel qualitativ bewertet. Zusätzlich wird hieraus auf einen möglichen Ventiltriebverschleiß geschlossen und die Funktionalität der Einspritzventile überprüft. Die Messdaten werden abgespeichert und eine Wartungshistorie erstellt. Mit der Wartungshistorie und der Ventilspielüberwachung werden zustandsbasierte Wartungsintervalle ermöglicht, sodass eine Wartung des Ventiltriebes einer Brennkraftmaschine nicht mehr nach Festintervallen, sondern erst nach Eingang einer Wartungsinformation erfolgen kann.

In der Offenlegungsschrift KR20180020390A wird ein Verfahren zur Überwachung des Ventiltriebes mittels Klopfsensor offenbart, wobei die Überwachung von Klopfen, Fehlzündungen sowie Schäden am Ventiltrieb durch einen Klopfsensor und einer zugehörigen Auswerteelektronik erfolgt. Das Signal eines Klopfsensors wird digitalisiert und an zwei getrennte Auswertebereiche der Auswerteelektronik übergeben. Die beiden Auswertebereiche filtern das Signal des Klopfsensors nach bestimmten Frequenzbändern. Ein Auswertebereich filtert das Signal des Klopfsensors nach einem vordefinierten Frequenzband, welches charakteristisch für Klopfen ist und ein anderer Auswertebereich filtert das Signal des Klopfsensors nach einem vordefinierten Frequenzband, welches charakteristisch für Fehlzündungen ist. Wird in einem Zylinder Klopfen erkannt, wird diese Information an ein Steuergerät der Auswerteelektronik weitergegeben, wodurch die Einspritzung in den jeweiligen Zylinder angepasst wird. Wird im anderen Auswertebereich eine Fehlzündung oder eine Beschädigung des Ventils erkannt, wird diese Information an das Steuergerät der Auswerteelektronik weitergegeben und der betroffene Zylinder kontinuierlich überwacht. Zusätzlich kann eine Warnung ausgegeben und/oder die Brennkraftmaschine gestopptwerden. Der Stand der Technik zur Ventiltriebverschleißerkennung mittels Körperschallsensoren zeichnet sich im Wesentlichen dadurch aus, dass durch die Signale von einem oder mehreren Klopfsensoren in vom Betriebspunkt der Brennkraftmaschine abhängigen Zeitfenstern Messdaten erhoben und ausgewertet werden. Die Zeitfenster sind insoweit optimiert, dass sie eine möglichst geringe Rechenleistung zur Auswertung der Messdaten benötigen und durch eine möglichst geringe Anzahl an Daten eine qualitative Aussage über das Ventilspiel treffen lassen. Dafür sind die Zeitfenster in vordefinierten Zeitabständen aktiviert, wie zum Beispiel während der Schließvorgänge der Gaswechselventile, oder werden bei Volllast oder während des Kaltstarts der Brennkraftmaschine zugeschaltet. Durch den Vergleich der Amplituden relevanter Frequenzen mit vordefinierten Referenzwerten erfolgt die qualitative Auswertung über einen Fehlerfall. Mittels getrennter Auswertung für separate Frequenzbereiche lassen sich die Fehlerfälle auf unterschiedliche Ursachen wie Ventilspiel, Fehlzündung oder Bauteilbeschädigung zurückführen. Insbesondere bei Großmotoren lassen sich über eine in der Art dokumentierte Wartungshistorie Festintervalle auf zustandsbasierte Wartungsintervalle ausweiten.

Die Nachteile aus dem Stand der Technik zur Ventiltriebverschleißerkennung mittels Körperschallsensoren ergeben sich dazu, dass gewählte Messfenster zur Messdatenerhebung in besonderem Maße dahingehend minimiert sind, um der begrenzten Rechenleistung gerecht zu werden. Ein Vergleich von Frequenzamplituden gegen einen Referenzwert lässt jedoch lediglich eine qualitative Aussage über das Ventilspiel zu. Die Aufteilung in vordefinierte Frequenzbereiche zur Bestimmung von Verschleißursachen ist dahingehend nachteilig, dass die Frequenzen unterschiedlicher Verschleißmechanismen über weite Bereiche des Frequenzspektrums innerhalb eines Zylinderkopfes einer Brennkraftmaschine gestreut sind, wodurch wiederum eine Begrenzung der vorhandenen Informationen anwendungsgemäß gegeben ist. Zustandsbasierte Wartungsintervalle geben weiterhin ausschließlich eine Verschleißwarnung bei Überschreiten eines Grenzwertes an.

Gemäß der US20160370254A1 wird außerdem ein Verfahren zur Ventiltriebsdiagnose mittels Zylinderbeschleunigungsmessung vorgestellt, wobei die Zylinderbeschleunigung über das von einem Klopfsensor aufgenommene Vibrationssignal abgeleitet und zusammen mit dem Kurbelwinkel mit einem Ventilspielschwellwert in einem Schwellwertventilspielmodell abgeglichen wird.

Gemäß der US2016103038A1 ist ein Verfahren und ein System zur Schwingungsanalyse eines Motors bekannt, bestehend aus Verarbeitungsmittel zum Erfassen von auf den Motor bezogenen Schwingungssignalen und zum Bilden mindestens eines Spektrogramms, das für einen Betriebszustand des Motors repräsentativ ist; Verarbeitungsmittel zum Auswählen mindestens eines interessierenden Bereichs in dem mindestens einen Spektrogramm; Verarbeitungsmittel zum Vergleichen jedes interessierenden Bereichs mit einem Satz von entsprechenden Vergleichsbereichen, die zu kommentierten Spektrogrammen gehören, die in einer Referenzdatenbank gespeichert sind, und zum Bestimmen eines Untersatzes von Vergleichsbereichen mit einem Schwingungsverhalten, das dem des interessierenden Bereichs ähnlich ist; und Ausgabemittel zum Anzeigen des Untersatzes von Vergleichsbereichen und der mit dem Untersatz von Vergleichsbereichen verknüpften Anmerkungen.

Gemäß der WO2016209522A1 umfasst ein System ein Motorsteuerungssystem, das zur Steuerung eines Motors konfiguriert ist. Das Motorsteuersystem umfasst einen Prozessor, der so konfiguriert ist, dass er ein Schwingungssignal empfängt, das von einem in einem Motor angeordneten Klopfsensorerfasstwird, und dass er ein Kurbelwellensignal empfängt, das von einem im Motor angeordneten Kurbelwinkelsensor erfasst wird, wobei das Kurbelwellensignal für einen Motorkurbelwinkel repräsentativ ist. Der Prozessor ist ferner so konfiguriert, dass er eine Ventilsteuerung überwacht, indem er eine Zylinderkopfbeschleunigungsmessung über das vom Klopfsensor empfangene Schwingungssignal ableitet, wobei der Prozessor so konfiguriert ist, dass er die Ventilsteuerung überwacht, indem er ein Ventilspiel auf der Grundlage des Schwingungssignals, des Motorkurbelwinkels und eines Schwellenventilspielmodels ableitet. Gemäß der CA2609718A1 ist ein Verfahren zum Ermitteln einer Verbrennungscharakteristik für einen Verbrennungsmotor anhand eines Beschleunigungsmessersignals bekannt, wobei das Verfahren die folgenden Schritte umfasst: a) Betreiben eines Kalibriermotors, der mit einem Kalibriersensor und einem Referenzbeschleunigungsmessersensor ausgestattet ist, bei einem vorgegebenen Betriebszustand und unter Verwendung des Kalibriersensors zur Erkennung der Verbrennungscharakteristik und des Referenzbeschleunigungsmessersensors zur Erfassung eines Referenzbeschleunigungsmessersignals; b) Korrelieren der Verbrennungscharakteristik mit dem Referenzbeschleunigungsmessersignal und Speichern korrelierter Daten in einer Kalibriertabelle, in der sie dem vorgegebenen Betriebszustand zugeordnet werden; und c) Ausrüsten eines Motors mit einem Beschleunigungsmessersensor, der Kalibriertabelle und einem elektronischen Motorsteuergerät, wobei, wenn der Motor beim vorgegebenen Betriebszustand betrieben wird, das elektronische Motorsteuergerät eine Echtzeit-Verbrennungscharakteristik ermitteln kann, indem ein Echtzeit-Beschleunigungsmessersignal vom Beschleunigungsmessersensor erfasst und eine Kreuzkorrelation mit den korrelierten Daten durchgeführt wird, die in der Kalibriertabelle gespeichert sind.

Gemäß der WO2015052408A1 ist ein Verfahren zum Überwachen eines Flugzeugtriebwerks bekannt, das dadurch gekennzeichnet ist, dass es die folgenden Schritte umfasst: Erfassen eines Zeitsignals einer Restspanne der Austrittstemperatur der Abgase des Flugzeugtriebwerks; Glätten des Zeitsignals, um eine erste Kurve zu bilden, die für die Temperaturrestspanne repräsentativ ist; Feststellen der abfallenden Teilstücke in der ersten Kurve; Erstellen einer zweiten Kurve durch Verketten der abfallenden Teilstücke, wobei die zweite Kurve kontinuierlich und dabei auf die abfallenden Teilstücke der ersten Kurve begrenzt ist, und Erstellen eines Vorhersagemodells anhand der zweiten Kurve, um wenigstens einen Ausfallprognoseindikator zu bestimmen.

Gemäß der EP3095992A1 ist ein System zum Schätzen eines Ereignisortes eines Triebwerks bekannt, umfassend: einen Controller, der so konfiguriert ist, dass er folgendes ausführt: Empfangen eines Signals von mindestens einem Klopfsensor, der mit einem Kolbenmotor gekoppelt ist, Transformieren des Signals unter Verwendung eines multivariaten Transformationsalgorithmus in eine Leistungsspektraldichte, Transformieren der Leistungsspektraldichte in eine Vielzahl von Merkmalsvektoren unter Verwendung von Vorhersagefrequenzbändern, Vorhersagen des Motorereignisorts unter Verwendung mindestens der Vielzahl von Merkmalsvektoren und eines Vorhersagemodells, und Einstellen des Betriebs des Kolbenmotors auf der Grundlage des Motorereignisorts.

### Aufgabe der Erfindung

Die Aufgabe der Erfindung liegt in der Bereitstellung eines Verfahrens zur Wartungsvorhersage von Komponenten einer Brennkraftmaschine mittels Körperschallsensor aufgrund einer quantitativen Verschleißbestimmung, insbesondere bezüglich des Ventilspiels. Hierbei soll der Verschleiß als ein real physischer Wert berechnet und der spezifische Wartungsfall vorausgesagt werden.

### Lösung der Aufgabe

Die Aufgabe wird durch ein Verfahren zur Wartungsvorhersage von Komponenten einer Brennkraftmaschine mittels Körperschallsensor gemäß dem Patentanspruch 1 gelöst, welche eine quantitative Aussage über den berechneten Verschleiß ermöglicht.

### Darstellung und Vorteile der Erfindung

Das erfindungsgemäße Verfahren wird auf Komponenten einer Brennkraftmaschine angewendet, welche zumindest einen Zylinderkopf aufweist, in welchem mindestens ein Zylinder angeordnet ist, wobei ein Kolben innerhalb des Zylinders, über einen Pleuel, bewegbar angeordnet ist. Der Zylinder bildetzusammen mit der Stirnfläche des Kolbens den Arbeitsraum der Brennkraftmaschine, welchem über Gaswechselventile Arbeitsmittel zugeführt und entzogen wird. Die durch das Verfahren auf ihren Verschleißzustand analysierten Komponenten können mechanische Bauteile, wie insbesondere der Ventiltrieb, aber auch Kolben, Lager, Einspritzventile oder Turbolader sein. Das erfindungsgemäße Verfahren umfasst im Wesentlichen die allgemeinen Verfahrensschritte
- Entwicklung eines mathematischen Regressionsmodells,
- Aufnahme von Messsignalen,
- Aufbereitung von Messdaten,
- Berechnung des Verschleißzustandes,
- Übertragung von Daten,
- Weiterverarbeitung von Daten.

Das mathematische Regressionsmodell ist hierbei das entscheidende Werkzeug, um aus Eingangsgrößen, welche die Messsignale eines Körperschallsensors sein können, den Verschleißzustand der betrachteten Komponente der Brennkraftmaschine zu überprüfen. Für den Anwendungsfall des Ventiltriebverschleißes sind die zu analysierenden Komponenten der Brennkraftmaschine die Gaswechselventile und als Maß für den Verschleißzustand wird das Ventilspiel überwacht. Die Entwicklung des mathematischen Regressionsmodells beschreibt einen iterativen Prozess, wobei das Regressionsmodell durch maschinelles Lernen an die angewendete Brennkraftmaschine abgestimmt werden muss. Dazu ist es erforderlich, eine Vielzahl an Messdaten aus unterschiedlichen Betriebspunkten der Brennkraftmaschine zu verarbeiten. Die Entwicklung des Regressionsmodells steht somit insbesondere im Zielkonflikt, eine möglichst exakte Auswertung durch Verarbeitung komplexer Messdaten zu erzeugen und gleichzeitig eine Überanpassung an Beispielmessdaten zu verhindern. In einem ersten Schritt der Entwicklung des Regressionsmodells wird daher erfindungsgemäß ein vordefiniertes Ventilspiel in den Gaswechselventilen der Brennkraftmaschine eingestellt. Alternativ können auch Teilsysteme der Brennkraftmaschine, welche die grundlegende Funktionalität der zu analysierenden Komponente abbilden, auf einem Komponentenprüfstand angeordnet sein. In einer vorteilhaften Ausführung werden der Zylinderkopf und der Ventiltrieb auf einem Komponentenprüfstand überprüft. In einem zweiten Schritt wird der Betriebszustand der Brennkraftmaschine auf einen vordefinierten Betriebspunkt eingestellt. In einer vorteilhaften Ausführungsform des erfindungsgemäßen Verfahrens, wobei die Brennkraftmaschine auf einem Motorprüfstand betrieben wird, wird ein stationärer Betriebspunkt eingestellt. Der stationäre Betriebspunkt der Brennkraftmaschine ergibt sich aus einer Kombination von Drehzahl und Last, wobei die Drehzahl konstant gehalten wird. Alternativ kann die Brennkraftmaschine in einem Fahrzeug oder einer sonstigen Vorrichtung betrieben werden, sodass ein definiertes Ventilspiel und ein definierter Betriebszustand der Brennkraftmaschine einstellbarsind. In einer vorteilhaften Ausführung des erfindungsgemäßen Verfahrens, wobei ein Teilsystem der Brennkraftmaschine, welches die grundlegende Funktionalität der zu analysierenden Komponente abbildet, auf einem Komponentenprüfstand betrieben wird, wird der Betriebszustand des Teilsystems analog zu dem Betriebszustand der realen Brennkraftmaschine eingestellt. In einem weiteren Schritt werden Messsignale von einem oder mehreren Körperschallsensoren aufgenommen. In einer vorteilhaften Ausführungsform des erfindungsgemäßen Verfahrens sind die Körperschallsensoren Klopfsensoren. Die Anzahl und Position der Klopfsensoren sind in geeigneter Art und Weise anwendungsgerecht auszulegen. Erfindungsgemäß vorteilhaft wird ein einzelner Klopfsensor verwendet, welcher in solcherart positioniert ist, dass dieser in unmittelbarer Nähe der zu analysierenden Komponente angeordnet und in seiner axialen Ausrichtung nach Vorzugsrichtung der Schwingungsausbreitung koaxial ausgerichtet ist. Für den Anwendungsfall des Ventiltriebverschleißes ist der Klopfsensor im Zylinderkopf integriert, weist einen minimalen Abstand zu allen Zylindern des Zylinderkopfes auf und ist in seiner funktionalen axialen Ausrichtung koaxial zu den Zylindern ausgerichtet. Alternativ können die Körperschallsensoren jegliche weitere Schwingungsaufnehmer sein, durch welche der Schwingungszustand der zu analysierenden Komponente der Brennkraftmaschine erfasst werden kann. Die Positionierung der Schwingungsaufnehmeran der Brennkraftmaschine oder Teilsystemen wird insbesondere konstruktiv eingeschränkt, wodurch deren Anordnung einen Kompromiss aus der akustisch optimalen Position und vorhandener Geometrie darstellt. Der oderdie Schwingungsaufnehmer können in einfacher Art und Weise an bereits vorhandenen Bohrungen oder Verschraubungen nachgerüstet werden. Alternativ können bereits in die Brennkraftmaschine integrierte Klopfsensoren als Schwingungsaufnehmer verwendet werden. Die Anzahl und Position der Schwingungsaufnehmer sind hierbei für eine geeignete Signalaufnahme variabel auszulegen. Die Messsignale der Körperschallsensoren werden in einem weiteren Schritt an eine Auswerteelektronik weitergeleitet. Die Auswerteelektronik kann Teil eines bereits vorhandenen Steuergerätes des Fahrzeuges oder der Vorrichtung, in welcher die Brennkraftmaschine betrieben wird, oder eine zusätzliche Recheneinheit, welche im Fahrzeug oder der Vorrichtung oder auf einem externen zentralen Server angeordnet ist, sein. Die aufgenommenen Messsignale werden in einem weiteren Schritt auf einen charakteristischen Zustand der Brennkraftmaschine zeitlich synchronisiert. Im Anwendungsfall des Ventiltriebverschleißes beziehen sich die charakteristischen Zustände auf Zeitbereiche innerhalb eines Arbeitsspiels der Brennkraftmaschine und können durch einen Kurbelwinkel definiert werden. Erfindungsgemäß vorteilhaft erfolgt die Synchronisation der Messdaten auf den oberen Totpunkt der Hochdruckphase des ersten Zylinders. Alternativ kann die Messsignalaufnahme auf den Zeitpunkt des Startes des Arbeitsspiels getriggert werden, sodass eine nachträgliche Messsignalsynchronisation entfällt. Dazu können zusätzliche Vorrichtungen und Messtechnik erforderlich sein. In einem weiteren Schritt zur Verarbeitung von Messsignalen aus mehreren Arbeitsspielen werden die Messsignale dekodiert, in solcherart, dass die einzelnen Messdaten jeweils den selben Ereignissen der Arbeitsspiele zugeordnet werden. Diese Ereignisse können durch den Kurbelwinkel der Brennkraftmaschine beschrieben sein. Dazu kann ein Zahnradencoder verwendet werden. In einer vorteilhaften Ausführungsform des erfindungsgemäßen Verfahrens, wobei die Entwicklung des Regressionsmodells mittels einer Brennkraftmaschine oder eines Teilsystems der Brennkraftmaschine durchgeführt wird, welche auf einem Motor- oder Komponentenprüfstand angeordnet ist, wird zusätzlich Lasermesstechnik verwendet, um den Ventilhubverlauf zu erfassen und somit die Messdatensynchronisation bzw. -dekodierung zu unterstützen. Alternativ können zusätzlich weitere Vorrichtungen und Verfahren angewendet werden, um den Ventilhubverlauf oder weitere charakteristische Größen, welche die Messdatensynchronisation und/oder -dekodierung unterstützen. Die nach solcherart vorbereiteten Messdaten werden in einem weiteren Schritt einer Signaltransformation unterzogen. In einer vorteilhaften Ausführungsform des erfindungsgemäßen Verfahrens ist die Signaltransformation eine Fourieranalyse. Alternativ können weitere Methoden zur Signaltransformation angewendet werden. Die Signaltransformation erfolgt jeweils für eine Messung eines Arbeitsspiels der Brennkraftmaschine, was einem Kurbelwinkelbereich von 0 bis 720°KW entspricht. Hierbei werden unterschiedliche Frequenzen abgebildet. Für den Anwendungsfall des Ventiltriebverschleißes wird erfindungsgemäß vorteilhaft ein Frequenzbereich von 0 bis 30kHz analysiert, wodurch der relevante Körperschallbereich für diese Schwingungsanregungen abgedeckt ist. Das Ergebnis der Signaltransformation für die Messdaten eines Messdatensatzes, bestehend aus einem definierten Ventilspiel eines definierten Betriebszustandes der Brennkraftmaschine sowie einer definierten Position des Körperschallsensors, bezogen auf ein Arbeitsspiel ist ein charakteristisches Spektrogramm. Im Spektrogramm sind demnach akustische Amplituden über einen Kurbelwinkel zwischen 0 bis 720°KW und einer Frequenz zwischen 0 bis 30kHz aufgetragen. Alternativ kannjeder weitere Frequenzbereich analysiert werden, wenn dieser fürden Verschleißzustand einer Komponente von Bedeutung ist. Eine Stützstelle des Spektrogramms, welche aus einem Kurbelwinkel, einer Frequenz und einer Frequenzamplitude besteht, wird im Folgenden als "Merkmal" bezeichnet. Je nach Auflösung ergibt sich eine bestimmte Anzahl an Merkmalen pro Spektrogramm. Erfindungsgemäß vorteilhaft wird für die Auflösung des Kurbelwinkels ein Inkrement von 5°KW gewählt, sodass sich eine entsprechende Anzahl an Merkmalen für ein Spektrogramm ergibt. Alternativ kann jede geeignete und bezüglich der benötigten Rechenleistung wirtschaftliche Auflösung gewählt werden. In einem weiteren Schritt werden die Spektrogramme für die unterschiedlichen Messdatensätze aggregiert und dienen als Basisdaten für ein mathematisches Regressionsmodell, welches in einem weiteren Schritt zunächst vorausgewählt wird. Erfindungsgemäß vorteilhaft wird ein Regressionsmodell aufbauend auf einer Stützvektormaschine für maschinelles Lernen verwendet. Alternativ kann jede weitere Methodik zur Bildung mathematischer Regressionsmodelle verwendet werden. In das Regressionsmodell werden die Spektrogramme sämtlicher Messdatensätze, eingepflegt. Aufbauend auf den Ergebnissen des Regressionsmodells kann in einem weiteren Schritt die Position des oderder Körperschallsensoren angepasst werden, mit dem Ziel, die vom Regressionsmodell berechnete Abweichung zum voreingestellten Verschleißzustand zu minimieren. In einem weiteren Schritt werden die Messdaten für das Modelltraining des zu erstellenden Regressionsmodells in der Art und Weise gefiltert, dass die Streuung der Ergebnisdaten minimiert wird. Mit den gefilterten Messdaten können Iterationsschritte wiederholt werden, wobei das Regressionsmodell und die Position des oder der Körperschallsensoren weiter angepasst werden können. In einem weiteren Schritt werden die vorhandenen Merkmale der Spektrogramme verringert. Eine Reduktion von irrelevanten oder redundanten Merkmalen des Spektrogramms führt zur Erhöhung der Modellgüte, jedoch eine zu geringe Anzahl an Merkmalen führt zu einem Informationsverlust. Hierbei kann jede Anzahl an Merkmalen optimiert werden, wenn sich daraus eine Verbesserung der Modellgüte des Regressionsmodells herbeiführen lässt. In einem letzten Schritt wird nunmehr das Ergebnis des Regressionsmodells ausgewertet. Mit den gewonnenen Informationen kann eine weitere Iteration zum Modelltraining des Regressionsmodells erfolgen. Erfindungsgemäß vorteilhaft für den Anwendungsfall Ventiltriebverschleiß wird das Regressionsmodell so lange angelernt, bis eine hinreichend genaue Modellgüte erreicht ist. Für eine hinreichend genaue Modellgüte kann sich einer Messgenauigkeit von 0,01 angenähert werden, was einer Messgenauigkeit der üblichen Messverfahren aus dem Stand der Technik entspricht. In diesem Zustand ist die Entwicklung des mathematischen Regressionsmodells und somit die Anpassung des erfindungsgemäßen Verfahrens auf die angewendete Brennkraftmaschine und den zu analysierenden Verschleißzustand abgeschlossen.

Das in solcherart erstellte Regressionsmodell findet nunmehr Anwendung im erfindungsgemäßen Verfahren. Im ersten Verfahrensschritt des erfindungsgemäßen Verfahrens erfolgt die Erfassung der Messsignale. Die vom Körperschallsensor erfassten Messsignale werden in das erfindungsgemäße Verfahren eingeleitet, wenn eine Freigabe zur Analyse des Verschleißzustandes erfolgt. Diese Freigabe ist an Freigabebedingungen geknüpft, wobei für die Erteilung der Freigabe sämtliche Freigabebedingungen erfüllt sein müssen. Die Freigabebedingungen werden kontinuierlich durch die Auswerteelektronik überprüft und bestehen aus internen Rechengrößen oderZustandsgrößen, welche von weiteren Einheiten empfangen werden. In einer vorteilhaften Ausführung des erfindungsgemäßen Verfahrens bestehen die Freigabebedingungen aus einer Drehzahl und/oder einem Drehmoment der Brennkraftmaschine und/oder einer Geschwindigkeit eines Fahrzeuges, welches durch die Brennkraftmaschine angetrieben wird und/oder einer Fluidtemperatur und/oder einer Anzahl der unmittelbar bisher aufeinandergefolgten Durchläufe des Verfahrens. Drehzahl, Drehmoment und Fluidtemperaturen, wie zum Beispiel die Öl- oder die Kühlwassertemperatur, sind Maße für den Betriebszustand der Brennkraftmaschine. Alternativ können weitere Zustandsgrößen und/oder Rechengrößen als Freigabebedingungen herangezogen werden. Erfindungsgemäß vorteilhaft werden die Freigabebedingungen während einem stationären Betriebspunkt der Brennkraftmaschine und/oder einem stationären Fahrbetrieb des Fahrzeuges, welches durch die Brennkraftmaschine angetrieben wird, erfüllt. Der stationäre Betriebspunkt der Brennkraftmaschine kann durch eine konstante Drehzahl und/oder ein konstantes Drehmoment sowie bei definierten Werten von Öl- und Kühlwassertemperatur beschrieben werden. Der stationäre Fahrbetrieb des Fahrzeuges kann durch eine konstante Geschwindigkeit beschrieben werden. Stationäre Betriebspunkte der Brennkraftmaschine sowie stationärer Fahrbetrieb werden hierbei als Normalbetrieb bezeichnet. Alternativ kann eine Freigabe zur Verarbeitung der Messsignale des oder der Körperschallsensoren durch das erfindungsgemäße Verfahren in jedem weiteren Betriebszustand der Brennkraftmaschine erfolgen, insofern, dass ein zugehöriges Regressionsmodell die geforderte Modellgüte in diesen Betriebszuständen abbilden kann. Weitere Einheiten, welche Informationen zu den Freigabebedingungen liefern, können Steuergeräte sein, welche interne Rechengrößen bereitstellen, und/oder Sensoren, welche zusätzliche Messsignale erfassen. Die Parameter für die Freigabebedingungen sind frei anpassbar und werden vor Einsatz des erfindungsgemäßen Verfahrens für die jeweilige Brennkraftmaschine appliziert. Die Parameter sind weiterhin als Standardparameter für baugleiche Brennkraftmaschinen gleichermaßen anwendbar. Erfindungsgemäß vorteilhaft wird der Normalbetrieb der Brennkraftmaschine analysiert und der Verschleiß der entsprechenden Komponente unmittelbar als ein realer Wert bestimmt.

In einem weiteren Verfahrensschritt des erfindungsgemäßen Verfahrens werden die von dem oder den Körperschallsensoren aufgenommenen Messsignale, analog zur Entwicklung des Regressionsmodells, durch die Auswerteelektronik bezüglich Messsignalsynchronisation, Messdatendekodierung und Spektrogrammerstellung aufbereitet. Erfindungsgemäß vorteilhaft befindet sich die Auswerteelektronik in einem Fahrzeug oder einem System, in welchem die Brennkraftmaschine angewendet wird, sodass die Messsignalverarbeitung "on Board" erfolgt. In einer weiteren vorteilhaften Ausführung des erfindungsgemäßen Verfahrens werden die Messsignale von dem oder den Körperschallsensoren über eine Datenübertragungseinheit und eine lokale und/oder mobile Datenverbindung auf einen zentralen Server geladen, wobei die Auswerteelektronik außerhalb des Fahrzeuges oder des Systems, welches die Brennkraftmaschine anwendet, angeordnet ist und die Daten von dem Server verarbeitet.

In einem weiteren Verfahrensschritt des erfindungsgemäßen Verfahrens wird der Wert für den Verschleißzustand berechnet. Dazu wird auf das für das analysierte Arbeitsspiel der Brennkraftmaschine erstellte Spektrogramm auf das für die verwendete Brennkraftmaschine angepasste Regressionsmodell angewendet. Das Regressionsmodell charakterisiert das zugrundeliegende Muster im Körperschall, sodass aus den ausgewählten Merkmalen des Spektrogramms ein Maß für den Verschleißzustand bestimmt wird. Im Anwendungsfall des Ventiltriebverschleißes wird entsprechend das Ventilspiel berechnet. Gleichzeitig werden die Freigabebedingungen erneut geprüft, sodass bei erteilter Freigabe weitere Arbeitsspiele der Brennkraftmaschine durch den oder die Körperschallsensoren messtechnisch erfasst werden. Aus der nunmehr entstandenen Vielzahl von berechneten Werten für den Verschleißzustand wird bei nicht erteilter Freigabe ein Mittelwert gebildet, welcher das Ergebnis der Berechnung des Verschleißzustandes darstellt. In einer vorteilhaften Ausführung des erfindungsgemäßen Verfahrens ist die Anzahl der unmittelbar aufeinander erfolgten Berechnungen des Verschleißzustandes eine Freigabebedingung, sodass die maximale Anzahl an Messdatensätzen zur Mittelwertbildung des Wertes für den Verschleißzustand begrenzt werden kann. Erfindungsgemäß vorteilhaft wird die maximale Anzahl der Werte für Mittelwertbildung des Wertes für den Verschleißzustand im Normalbetrieb auf fünf begrenzt. Alternativ kann jede weitere Anzahl angewendet werden. Weiterhin ist eine dynamische Anpassung der Anzahl der Werte für die Mittelwertbildung in Abhängigkeit vom Betriebszustand der Brennkraftmaschine vorteilhaft.

In einem weiteren Verfahrensschritt des erfindungsgemäßen Verfahrens erfolgt die Übertragung der Ergebnisdaten. Die Ergebnisdaten der Auswerteelektronik werden auf das Steuergerät der Brennkraftmaschine und/oder auf den zentralen Server und/oder jede weitere Einheit, welche diese Daten weiterverarbeiten kann, übertragen. In einer vorteilhaften Ausführung des erfindungsgemäßen Verfahrens, wobei die Brennkraftmaschine als Antriebseinheit in einem Fahrzeug angeordnet ist, sind die Informationsschnittstellen der Auswerteelektronik mit dem Datennetzwerk des Fahrzeuges verbunden, sodass die Übertragung der Ergebnisdaten auf das Steuergerät der Brennkraftmaschine netzwerkintern erfolgt. Gleichzeitig werden die Ergebnisdaten über eine Datenübertragungseinheit, welche der Auswerteelektronik innewohnt, über eine mobile Datenverbindung auf einen zentralen Server übertragen.

In einem letzten Schritt des erfindungsgemäßen Verfahrens erfolgt die Weiterverarbeitung der Ergebnisdaten. In einer vorteilhaften Ausführungsform wird der Verschleißzustand einer Komponente, welcher durch das Regressionsmodell bestimmt wird, als Ergebnis auf dem Steuergerät der Brennkraftmaschine und einem zentralen Server weiterverarbeitet. Im Steuergerät dientder Verschleißzustand als ein Diagnosewert und kann dabei auf Überschreiten von Grenzwerten überwacht werden sowie als interne Rechengröße weiterverwendet werden. Im Anwendungsfall des Ventiltriebverschleißes einer Brennkraftmaschine in einem Fahrzeug wird das Ventilspiel überwacht und bei Überschreiten eines Grenzwertes kann eine Warnung und/oder ein Wartungshinweis im Fahrzeug angezeigt werden. Zusätzlich ist ein Ventilspiel ein Hinweis auf veränderte Öffnungs- und Schließzeiten der Gaswechselventile, wodurch die thermodynamischen Berechnungen des Steuergerätes der Brennkraftmaschine angepasst werden können. Die verbesserte Kenntnis über die Verbrennungslage der Brennkraftmaschine kann somit einen positiven Einfluss auf die Verbrennungsprodukte haben. Die Weiterverarbeitung der Daten auf dem zentralen Server kann in unterschiedlichen Etappen des erfindungsgemäßen Verfahrens beginnen. Erfindungsgemäß vorteilhaft wird der durch die Auswerteelektronik ermittelte Verschleißzustand auf den zentralen Server übertragen und in Form von statistischen Auswertungen weiterverarbeitet. In einer weiteren vorteilhaften Ausführung des erfindungsgemäßen Verfahrens werden bereits die aufbereiteten Spektrogramme auf den zentralen Server übertragen, wobei ein Teil der Auswerteelektronik auf diesem Server ausgelagert ist. Hierbei wird das Regressionsmodell auf dem Server angewendet, wodurch der Verschleißzustand der Brennkraftmaschine extern berechnet wird. Das Ergebnis des Verschleißzustandes kann über die mobile Datenverbindung wieder auf das Steuergerät der Brennkraftmaschine übertragen werden. Alternativ werden die Messsignale von dem oder den Klopfsensoren auf den zentralen Server übertragen, wobei die gesamte Auswerteelektronik auf dem Server ausgelagert ist. Hierbei erfolgt die gesamte Messdatenaufbereitung, wie die Messsignalsynchronisation, die Messdatendekodierung und die Signaltransformation ebenfalls extern auf dem zentralen Server. Das Ergebnis des Verschleißzustandes kann über die mobile Datenverbindung wieder auf das Steuergerät der Brennkraftmaschine übertragen werden. Alternativ können die Informationen und Daten aus jedem weiteren Verfahrensschritt des erfindungsgemäßen Verfahrens entweder extern auf einem zentralen Server oder lokal intern in einem Fahrzeug oder der Vorrichtung, in welcher die entsprechende Brennkraftmaschine angewendet wird, verarbeitet werden. Im Anwendungsfall des Ventiltriebverschleißes einer Brennkraftmaschine in einem Fahrzeug wird durch die übermittelten Ventilspiele eine Verschleißhistorie für das Fahrzeug auf dem zentralen Server erstellt, gespeichert und mit jeder neuen Diagnose aktualisiert. Durch statistische Aufbereitung der Datensätze eines Fahrzeuges oder einer Fahrzeugflotte mit baugleichen Brennkraftmaschinen kann das erfindungsgemäße Verfahren auf unterschiedliche Analysemethodiken von weiteren Komponenten angelernt werden. Durch die Kenntnisse über die jeweiligen spezifischen Verschleißmechanismen kann in Verbindung mit entsprechend antrainierten Regressionsmodellen eine Verschleißhistorie bezüglich der unterschiedlichen Verschleißmechanismen erstellt werden. Wenn die Verschleißhistorie extrapoliert wird, können unter Hinzunahme von weiteren Daten über die Brennkraftmaschine und ihrer Anwendung nicht nur die Zeit des Versagens der Komponente, sondern auch der spezifische Wartungsfall vorhergesagtwerden. Somit können einzelne Wartungsmaßnahmen reduziert, das Ersatzteilemanagement effizient gestaltet sowie die Planung und der Maschineneinsatz optimiert werden.

### Ausführungsbeispiel

Weitere Merkmale, Anwendungsmöglichkeiten und Vorteile der Erfindung ergeben sich aus der nachfolgenden Beschreibung von Ausführungsbeispielen der Erfindung unter Bezugnahme auf die schematisch dargestellten Zeichnungen.

Hierbei zeigen:
- Fig. 1:: Schematischer Ablaufplan des erfindungsgemäßen Verfahrens, wobei die Brennkraftmaschine und die Auswerteelektronik in einem Fahrzeug angeordnet sind und das Ergebnis des Verschleißzustandes auf einen zentralen Server zur Weiterverarbeitung übertragen wird.
- Fig. 2:: Schematischer Ablaufplan zur Entwicklung des mathematischen Regressionsmodells zur Bestimmung des Verschleißzustandes einer Komponente einer Brennkraftmaschine.
- Fig. 3:: Schematischer Ablaufplan des erfindungsgemäßen Verfahrens, wobei die Brennkraftmaschine und die Auswerteelektronik in einem Fahrzeug angeordnet sind und die Spektrogramme auf einen zentralen Server zur Auswertung und Weiterverarbeitung übertragen werden.
- Fig. 4:: Schematischer Ablaufplan des erfindungsgemäßen Verfahrens, wobei die Brennkraftmaschine in einem Fahrzeug angeordnet ist und die Auswerteelektronik auf einem zentralen Server, wobei die Messsignale auf den zentralen Server zur Messdatenaufbereitung, Auswertung und Weiterverarbeitung übertragen werden.

Die Messdatenerhebung und Anpassung des erfindungsgemäßen Verfahrens erfolgen auf eine nicht dargestellte Brennkraftmaschine, wobei der Zylinderkopf der Brennkraftmaschine als Teilsystem auf einem nicht dargestellten Komponentenprüfstand betrieben wird. Die Brennkraftmaschine ist ein Sechszylinderdieselmotor mit 12I Hubraum, für den Einsatz in Nutzfahrzeugen.

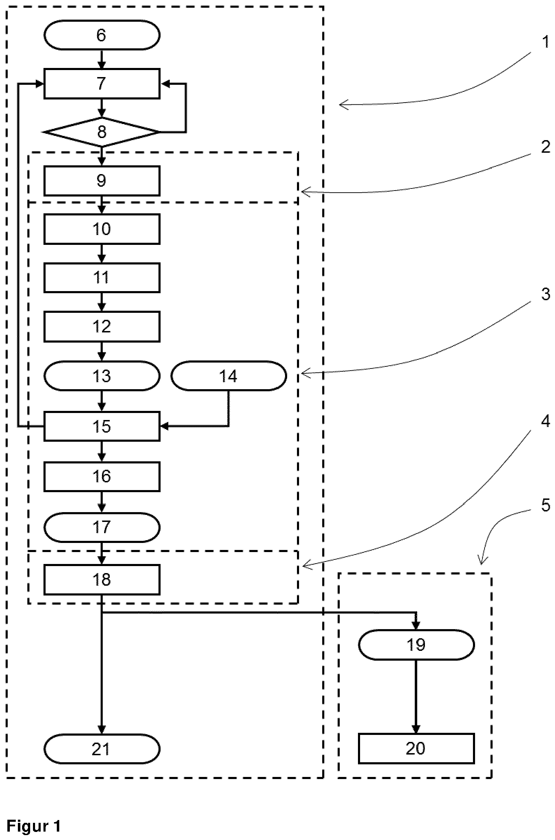

In Fig. 1 ist der schematische Ablaufplan des erfindungsgemäßen Verfahrens dargestellt. Die nicht dargestellte Brennkraftmaschine ist als Antriebseinheit in einem Kraftfahrzeug (1) angeordnet. Am Zylinderkopf der Brennkraftmaschine ist ein Körperschallsensor (2) in der Form eines Klopfsensors angebracht. Innerhalb des Fahrzeuges ist weiterhin eine Auswerteelektronik (3) angeordnet, welche Schnittstellen zu dem Klopfsensor (2), dem Steuergerät der Brennkraftmaschine sowie zu einer Datenübertragungseinheit (4) aufweist. Die Datenübertragungseinheit (4) kann Daten der Auswerteelektronik (3) über eine mobile und/oder lokale Datenverbindung auf einen zentralen Server (5) laden. Bei der Brennkraftmaschine soll das Ventilspiel als Maß für den Ventiltriebverschleiß bestimmt werden. Ausgangszustand für die Anwendung des erfindungsgemäßen Verfahrens ist der Betrieb der Brennkraftmaschine (6). Im Betrieb der Brennkraftmaschine (6) werden die Freigabebedingungen zur Diagnose des Ventilspiels kontinuierlich überwacht (7). Die Freigabebedingungen beinhalten die Drehzahl der Brennkraftmaschine, die Fahrzeuggeschwindigkeit, die Öl- und Kühlmitteltemperatur sowie die Anzahl der bereits aufeinandergefolgten Diagnosen des Ventilspiels. Sind die Freigabebedingungen erteilt, wird die Freigabe zur Messsignalaufnahme erteilt (8) und die vom Klopfsensor (2) erzeugten Messsignale werden in die aktive Messsignalaufnahme (9) geleitet. Aktive Messsignalaufnahme (9) bedeutet hierbei, dass die aufgenommenen Messsignale an die Auswerteelektronik (3) übermittelt werden. Werden die Freigabebedingungen nicht erfüllt, werden keine Messsignale an die Auswerteelektronik (3) übermittelt. Die Messsignale des Klopfsensors (2) werden dennoch an das Steuergerät der Brennkraftmaschine übermittelt und für weitere steuergerätinterne Funktionen verwendet. Die in der Auswerteelektronik (3) aufgenommenen Messsignale werden in einem ersten Schritt der Messdatenaufbereitung zeitlich synchronisiert (10). Hierbei werden die Messsignale innerhalb eines Arbeitsspiels der Brennkraftmaschine über den Kurbelwinkel auf den oberen Totpunkt der Hochdruckphase des ersten Zylinders synchronisiert. In einem weiteren Schritt werden die Messdaten dekodiert und denselben Ereignissen des Arbeitsspiels zugeordnet (11). In einem letzten Schritt der Messdatenaufbereitung werden die Messdaten einer Signaltransformation unterzogen. Diese besteht hierbei aus einer Fourieranalyse (12). Das Ergebnis der Fourieranalyse (12) ist ein Spektrogramm (13) für das aufgenommene Arbeitsspiel. Das Spektrogramm (13) dient als eine Eingangsgrößedes mathematischen Regressionsmodells (14) und führt zusammen mit diesem die Ventilspielauswertung (15) durch. Dabei werden für das Ventilspiel typische Frequenzen im Regressionsmodell (14) ausgewertet und ein Maß für das Ventilspiel (17) bestimmt. Simultan werden die Freigabebedingungen erneut überprüft (7), sodass bei erteilter Freigabe (8) erneut Messsignale zum gleichen Betriebspunkt der Brennkraftmaschine ausgewertet werden. Nach fünf aufeinanderfolgenden Ventilspielermittlungen wird die Freigabe für einen erneuten Durchlauf des Verfahrens gesperrt. Aus den nunmehr maximal fünf gesammelten Ventilspielen wird ein Mittelwert gebildet (16), welcher dann ein Maß für das reale Ventilspiel (17) ist. In einem weiteren Schritt erfolgt die Übertragung (18) des ermittelten Ventilspiels (17) auf einen zentralen Server (5, 19) mittels einer Datenübertragungseinheit (4) und auf das Steuergerätder Brennkraftmaschine (21). Auf dem Steuergerät der Brennkraftmaschine dient das Ventilspiel (17) als eine Eingangsgröße im Fehlermanager und/oder in weiteren Funktionen. Auf dem zentralen Server (5) erfolgt eine Weiterverarbeitung (20) des Ventilspiels, auf die Art und Weise, dass eine Ventilspiel- und Wartungshistorie für das Fahrzeug erstellt wird, dass das Ventilspiel in statistische Fahrzeugflottenauswertungen eingeht sowie, dass ein spezifischer Wartungseinsatz geplant und der notwendige Ressourceneinsatz koordiniert wird.

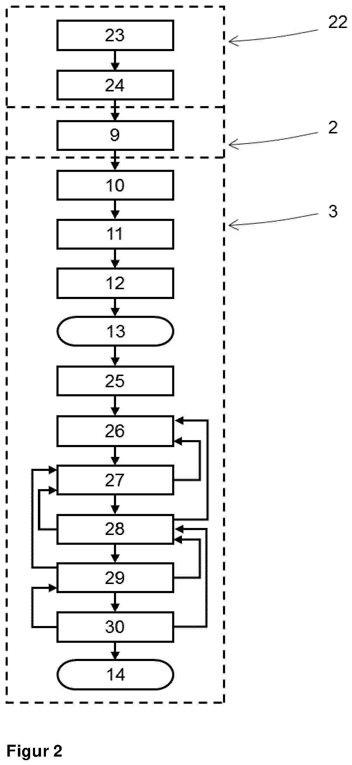

In Fig. 2 ist der schematische Ablaufplan zur Entwicklung des mathematischen Regressionsmodells (14) und Anpassung des erfindungsgemäßen Verfahrens an die verwendete Brennkraftmaschine abgebildet. Hierbei werden Messdaten aus definierten Ventilspielen, Sensorpositionen sowie Kombinationen aus Drehzahl und Last ermittelt. In einem ersten Schritt wird das für den Versuch ausgewählte Ventilspiel eingestellt (23). Die Ventilspiele werden für einen an den Ventiltrieb der Brennkraftmaschine angepassten Bereich analysiert. Die Drehzahl-Last-Kombinationen werden aus für die Brennkraftmaschine charakteristischen Stützstellen des Motorkennfeldes gebildet. Der Klopfsensor wird nachgerüstet und an verschiedenen Positionen bei bereits vorhandenen Verschraubungen am Zylinderkopf der Brennkraftmaschine angebracht. Die Brennkraftmaschine wird als Teilsystem in Form ihres Zylinderkopfes einem Komponentenprüfstand (22) betrieben. In einem ersten Schritt wird bei sämtlichen Gaswechselventilen ein definiertes Ventilspiel eingestellt (23) und in einem zweiten Schritt wird ein definierter Betriebspunkt des Teilsystems der Brennkraftmaschine eingestellt (24). Die folgenden Schritte erfolgen analog zu den Schritten des erfindungsgemäßen Verfahrens bezüglich Messsignalaufnahme und Messsignalweiterleitung (9) durch den Klopfsensor (2) und Messsignalsynchronisation (10), Messdatendekodierung (11), Signaltransformation (12) und Spektrogrammerstellung (13) mittels Auswerteelektronik (3). In einem weiteren Schritt werden die so gesammelten Messdatensätze der Spektrogramme (13) in einer Ergebnismatrix aggregiert (25) und in ein erstes Regressionsmodell eingepflegt (26). Aufbauend auf den Ergebnissen des ersten Regressionsmodells (26) werden weitere Schritte zur Optimierung der Modellgüte durchgeführt. In einem weiteren Schritt wird die gewählte Sensorposition angepasst (27), sodass das Regressionsmodell neu bewertet werden kann (26). In einem weiteren Schritt werden die Messdaten der Spektrogramme gefiltert (28), sodass die Trennschärfe des Modells erhöht wird. Nach diesem Schritt kann die Sensorposition (27) sowie das Regressionsmodell (26) erneut angepasst werden. In einem weiteren Schritt werden die Merkmale der Spektrogramme (13) reduziert (29), wobei irrelevante und redundante Merkmale entfernt werden. Nach diesem Schritt kann die Messdatenfilterung (28) sowie die Sensorposition (27) erneut angepasst werden. In einem letzten Schritt wird das Ergebnis der aktuellen Iteration bewertet (30) und entweder erfolgt eine weitere Iteration, um die Modellgüte weiter zu verbessern, oder die Entwicklung des Regressionsmodells ist abgeschlossen und das Regressionsmodell (14) ist erstellt.

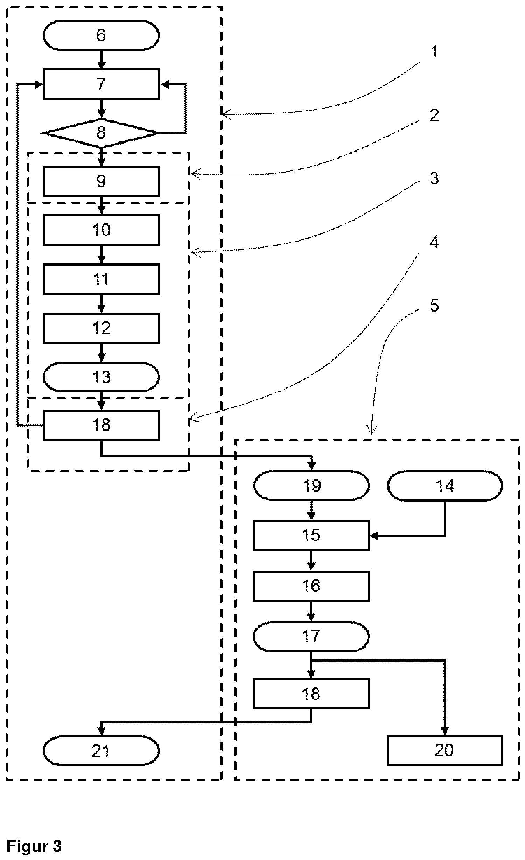

In Fig. 3 ist der schematische Ablaufplan des erfindungsgemäßen Verfahrens dargestellt, wobei die Brennkraftmaschine und die Auswerteelektronik (3) in einem Fahrzeug angeordnet sind und die Spektrogramme auf einen zentralen Server (5) zur Auswertung und Weiterverarbeitung übertragen werden. Die Verfahrensschritte bezüglich Betrieb der Brennkraftmaschine (6), Überprüfung der Freigabebedingungen (7), Erteilung der Freigabe (8), Messsignalaufnahme und -weiterleitung (9) an die Auswertelektronik (3) durch den Klopfsensor (2), Messsignalsynchronisation (10), Messdatendekodierung (11), Signaltransformation (12) und Spektrogrammerstellung (13) sind analog zur Ausführung des erfindungsgemäßen Verfahrens nach Fig. 1. Die erstellten Spektrogramme (13) werden durch eine

Datenübertragungseinheit (4) auf einen zentralen Server übertragen (5, 18). Simultan werden die Freigabebedingungen erneut überprüft (7), sodass bei erteilter Freigabe (8) erneut Messsignale zum gleichen Betriebspunkt der Brennkraftmaschine ausgewertet werden. Nach fünf aufeinanderfolgenden Ventilspielermittlungen wird die Freigabe für einen erneuten Durchlauf des Verfahrens gesperrt. Die übertragenen Daten (19) der Spektrogramme (13) dienen als eine Eingangsgröße des mathematischen Regressionsmodells (14), welches die Ventilspielauswertung (15) durchführt. Dabei werden für das Ventilspiel typische Frequenzen im Regressionsmodell (14) ausgewertet, welches das Ventilspiel (17) als realen Wert bestimmt. Aus den nunmehr maximal fünf gesammelten Ventilspielen wird ein Mittelwert gebildet (16), welcher dann ein Maß für das reale Ventilspiel (17) ist. In einem weiteren Schritt erfolgt die Übertragung (18) des ermittelten Ventilspiels (17) auf das Steuergerät der Brennkraftmaschine mittels der Datenübertragungseinheit (4) und die weitere Verarbeitung des Ventilspiels (17) auf dem Server (20) auf die Art und Weise, dass eine Ventilspiel- und Wartungshistorie für das Fahrzeug (1) erstellt wird, dass das Ventilspiel (17) in statistische Fahrzeugflottenauswertungen eingeht sowie, dass ein spezifischer Wartungseinsatz geplant und der notwendige Ressourceneinsatz koordiniert wird. Auf dem Steuergerät der Brennkraftmaschine dient das Ventilspiel (17) als eine Eingangsgröße im Fehlermanager und/oder in weiteren Funktionen. Auf dem zentralen Server erfolgt eine Weiterverarbeitung (20) des Ventilspiels (17).

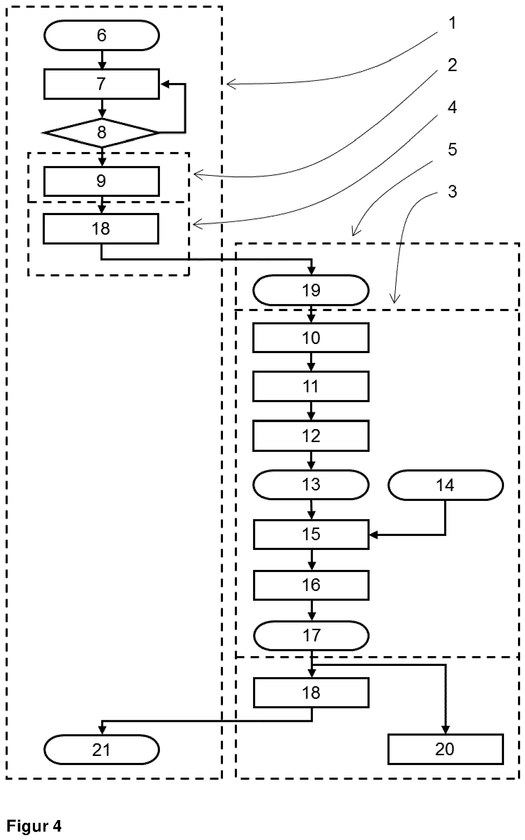

In Fig. 4 ist der schematische Ablaufplan des erfindungsgemäßen Verfahrens dargestellt, wobei die Brennkraftmaschine in einem Fahrzeug angeordnet ist und die Auswerteelektronik (3) auf einem zentralen Server (5), wobei die Messsignale auf den zentralen Serverzur Messdatenaufbereitung, Auswertung und Weiterverarbeitung übertragen werden. Die Verfahrensschritte bezüglich Betrieb der Brennkraftmaschine (6), Überprüfung der Freigabebedingungen (7), Erteilung der Freigabe (8) und Messsignalaufnahme (9) durch den Klopfsensor (2) sind analog zur Ausführung des erfindungsgemäßen Verfahrens nach Fig. 1.

Die aufgenommenen Messsignale (9) werden durch eine Datenübertragungseinheit (4) auf einen zentralen Server übertragen (5, 18). Die Auswerteelektronik(3) ist an den zentralen Server (5) gekoppelt. Die an den zentralen Server (5) übermittelten Daten (19) werden bezüglich der Verfahrensschritte Messsignalsynchronisation (10), Messdatendekodierung (11), Signaltransformation (12) und Spektrogrammerstellung (13), Ventilspielauswertung (15) mittels Regressionsmodell (14) und Mittelwertbildung (16) analog zur Ausführung des erfindungsgemäßen Verfahrens nach Fig. 1 ausgewertet. Hierbei werden nach erteilter Freigabe (8) Messdaten von bis zu fünf aufeinanderfolgenden Arbeitsspielen vom Klopfsensor aufgenommen (9) und auf den zentralen Server (5) übertragen (18). In einem weiteren Schritt erfolgt die Übertragung (18) des ermittelten Ventilspiels (17) auf das Steuergerät der Brennkraftmaschine mittels der Datenübertragungseinheit (4) und die weitere Verarbeitung des Ventilspiels (17) auf dem Server (20) auf die Art und Weise, dass eine Ventilspiel- und Wartungshistorie für das Fahrzeug erstellt wird, dass das Ventilspiel (17) in statistische Fahrzeugflottenauswertungen eingeht sowie, dass ein spezifischer Wartungseinsatz geplant und der notwenige Ressourceneinsatz koordiniert wird. Auf dem Steuergerätder Brennkraftmaschine dient das Ventilspiel (17) als eine Eingangsgröße im Fehlermanager und/oder in weiteren Funktionen. Auf dem zentralen Server (5) erfolgt eine Weiterverarbeitung (20) des Ventilspiels (17).

### Bezugszeichenliste

- 1: Kraftfahrzeug
- 2: Körperschallsensor
- 3: Auswerteelektronik
- 4: Datenübertragungseinheit
- 5: Zentraler Server
- 6: Brennkraftmaschine in Betrieb
- 7: Freigabebedingungen prüfen
- 8: Freigabeerteilung
- 9: Messsignalaufnahme
- 10: Messsignalsynchronisation
- 11: Messdatendekodierung
- 12: Signaltransformation
- 13: Spektrogramm
- 14: Regressionsmodell
- 15: Ventilspielauswertung
- 16: Mittelwertbildung
- 17: Ventilspiel
- 18: Datenübertragung
- 19: Daten auf Server
- 20: Daten weiterverarbeiten
- 21: Daten auf Steuergerät
- 22: Prüfstand
- 23: Ventilspiel einstellen
- 24: Betriebspunkt einstellen
- 25: Messdaten aggregieren
- 26: Regressionsmodell vorauswählen
- 27: Sensorposition anpassen
- 28: Messdaten filtern
- 29: Merkmale reduzieren
- 30: Ergebnis bewerten

## Patentansprüche

1. Verfahren zur Wartungsvorhersage von Komponenten einer Brennkraftmaschine mittels Körperschallsensor (2), wobei durch einen oder mehrere Körperschallsensoren (2) Schwingungen der Komponenten der Brennkraftmaschine aufgenommen werden, wobei während des Betriebs der Brennkraftmaschine die Freigabe zur Diagnose des Verschleißzustandes der Komponenten der Brennkraftmaschine kontinuierlich geprüft wird (7), wobei der oder die Körperschallsensoren (2), welche an einer oder mehreren Positionen an der Brennkraftmaschine angeordnet sind, Messsignale aufnehmen (9) und diese an eine Auswerteelektronik (3) weiterleiten, wobei die Messsignale auf einen charakteristischen Zustand der Brennkraftmaschine zeitlich synchronisiert (10) oder die Messsignalaufnahme zeitlich getriggert werden, wobei die zeitlich synchronisierten oder getriggerten Messsignale zu Messdaten dekodiert werden (11), wobei die dekodierten Messdaten einer Signaltransformation (12) unterzogen werden, wobei aus der Signaltransformation ein oder mehrere Spektrogramme (13) erstellt werden, wobei das oder die Spektrogramme (13) von einem oder mehreren mathematischen Regressionsmodellen (14) in der Auswerteelektronik (3) ausgewertet werden, wobei ein Regressionsmodell (14) das zugrundeliegende Muster im Körperschall charakterisiert, sodass aus den ausgewählten Merkmalen eines Spektrogramms (13) ein Maß für den Verschleißzustand bestimmt wird, sowie gleichzeitig die Freigabe zur Diagnose des Verschleißzustandes der Komponenten der Brennkraftmaschine erneut geprüft wird (7), wobei bei erteilter Freigabe (8) der Prozess, beginnend bei der Signalaufnahme (9) durch den oder die Körperschallsensoren (2), erneut abläuft, solange, bis die Freigabe erlischt, wobei ein Mittelwert aus den in der Art entstandenen Auswertungen gebildet wird (16), sodass dieser ein Maß für den Verschleiß der analysierten Komponente darstellt, wobei dieser Mittelwert an weitere Einheiten übertragen wird (18), welche diesen weiterverarbeiten.

2. Verfahren nach Patentanspruch 1, **dadurch gekennzeichnet, dass** die Komponenten der Brennkraftmaschine insbesondere einen Ventiltrieb und/oder Kolben und/oder Lager und/oder Einspritzventile und/oder Turbolader einschließen.

3. Verfahren nach Patentanspruch 1 oder 2, **dadurch gekennzeichnet, dass** die Freigabe zur Diagnose des Verschleißzustandes von Komponenten der Brennkraftmaschine eine Drehzahl und/oder ein Drehmoment und/oder eine Geschwindigkeit und/oder eine Fluidtemperatur und/oder die Anzahl der unmittelbar bisher aufeinandergefolgten Durchläufe des Verfahrens einschließen.

4. Verfahren nach einem der vorherigen Patentansprüche, **dadurch gekennzeichnet, dass** die Position des Körperschallsensors (2) auf einen minimalen Abstand zu der oder den zu analysierenden Komponenten optimiert wird sowie, dass die axiale Ausrichtung des Körperschallsensors (2) der Vorzugsrichtung der Schwingungsausbreitung angenähert wird.

5. Verfahren nach einem der vorherigen Patentansprüche, **dadurch gekennzeichnet, dass** der Körperschallsensor (2) ein Klopfsensor ist.

6. Verfahren nach einem der vorherigen Patentansprüche, **dadurch gekennzeichnet, dass** der charakteristische Zustand der Brennkraftmaschine zur Synchronisation (10) der Messsignale ein Kurbelwinkel ist.

7. Verfahren nach einem der vorherigen Patentansprüche, **dadurch gekennzeichnet, dass** die Signaltransformation (12) eine Fourieranalyse ist.

8. Verfahren nach einem der vorherigen Patentansprüche, **dadurch gekennzeichnet, dass** die Parametrierung des Regressionsmodells (14), mit welchem Messdaten verglichen werden und dessen Auswertung als ein Maß für den Verschleißzustand gewertet wird, durch maschinelles Lernen optimiert wird, wobei ein Regressionsmodell (14) aufbauend auf einer Stützvektormaschine für maschinelles Lernen verwendet wird.

9. Verfahren nach einem der vorherigen Patentansprüche, **dadurch gekennzeichnet, dass** der Verschleißzustand ein Spiel und/oder eine Maßhaltigkeit und/oder eine Formhaltigkeit und/oder eine Oberflächenbeschaffenheit und/oder eine Funktionstüchtigkeit ist.

10. Verfahren nach einem der vorherigen Patentansprüche, **dadurch gekennzeichnet, dass** weitere Einheiten, auf welche der Mittelwert (16) übertragen wird, ein Steuergerät (21) der Brennkraftmaschine, auf welchem dieser als Eingangsgrößen in weiteren Funktionen verarbeitet wird, und einen zentralen Server (19) einschließen, auf welchem eine Verschleiß- und Wartungshistorie erstellt und/oder eine statistische Flottenauswertung baugleicher Brennkraftmaschinen entwickelt und/oder eine Planung eines spezifischen Wartungseinsatzes durchgeführt und/oder eine Koordination von Ressourcen geplant wird.

## Claims

1. Method for predicting the maintenance of components of an internal combustion engine by means of structure-borne noise sensor (2), wherein vibrations of the components of the internal combustion engine are recorded by one or more structure-borne noise sensors (2), wherein during operation of the internal combustion engine the release for diagnosis of the state of wear of the components of the internal combustion engine is continuously checked (7), wherein the structure-borne noise sensor or sensors (2), which is/are arranged in one or more positions on the internal combustion engine, record measurement signals (9) and transmit them to an evaluation electronics system (3), wherein the measurement signals are time-synchronized (10) or the measurement signal recording is time-triggered in response to a characteristic state of the internal combustion engine, wherein the time-synchronized or time-triggered measurement signals are decoded (11) into measurement data, wherein the decoded measurement data are subjected to a signal transformation (12), wherein one or more spectrograms (13) are created from the signal transformation, wherein the spectrogram or spectrograms (13) are evaluated by one or more mathematical regression models (14) in the evaluation electronics system (3), wherein a regression model (14) characterizes the underlying pattern in the structure-borne noise, so that a measure of the state of wear is determined from the selected features of a spectrogram (13), and, at the same time, the release for diagnosis of the state of wear of the components of the internal combustion engine is checked again (7), whereby when release (8) is granted, the process, starting with the signal recording (9) by the structure-borne noise sensor or sensors (2), runs again until the release expires, wherein an average value is formed (16) from the evaluations created in this way, so that this represents a measure of the wear of the analysed component, wherein this mean value is transmitted (18) to further units which process it further.

2. Method according to Claim 1, **characterized in that** the components of the internal combustion engine include in particular a valve train and/or piston and/or bearing and/or injection valves and/or turbocharger.

3. Method according to Claim 1 or 2, **characterized in that** the release for diagnosing the state of wear of components of the internal combustion engine includes a rotation speed and/or a torque and/or a speed and/or a fluid temperature and/or the number of immediately successive runs of the method up to this point.

4. Method according to one of the preceding claims, **characterized in that** the position of the structure-borne noise sensor (2) is optimized to a minimum distance from the component or components to be analysed, and **in that** the axial orientation of the structure-borne noise sensor (2) is approximated to the preferred direction of the vibration propagation.

5. Method according to one of the preceding claims, **characterized in that** the structure-borne noise sensor (2) is a knock sensor.

6. Method according to one of the preceding claims, **characterized in that** the characteristic state of the internal combustion engine for the synchronization (10) of the measurement signals is a crank angle.

7. Method according to one of the preceding claims, **characterized in that** the signal transformation (12) is a Fourier analysis.

8. Method according to one of the preceding claims, **characterized in that** the parameterization of the regression model (14), with which measurement data are compared and the evaluation of which is classified as a measure of the state of wear, is optimized by machine learning, wherein a regression model (14) based on a support vector machine is used for machine learning.

9. Method according to one of the preceding claims, **characterized in that** the state of wear is a degree of play and/or a dimensional accuracy and/or a dimensional stability and/or a surface quality and/or a functionality.

10. Method according to one of the preceding claims, **characterized in that** further units to which the mean value (16) is transmitted include a control unit (21) of the internal combustion engine, on which control unit said mean value is processed as input variables in further functions, and a central server (19) on which a wear and maintenance history is created and/or a statistical fleet evaluation of identical internal combustion engines is developed and/or planning of a specific maintenance assignment is carried out and/or coordination of resources is planned.

## Revendications

1. Procédé de prévision de maintenance de composants d'un moteur à combustion interne à l'aide de capteurs de bruit de structure (2), les vibrations des composants du moteur à combustion interne étant captées par un ou plusieurs capteurs de bruit de structure (2), l'autorisation du diagnostic de l'état d'usure des composants du moteur à combustion interne étant vérifiée en permanence (7) pendant le fonctionnement du moteur à combustion interne, le ou les capteurs de bruit de structure (2), qui sont disposés à une ou plusieurs positions sur le moteur à combustion interne captant des signaux de mesure (9) et transmettant ceuxci à une électronique d'évaluation (3), les signaux de mesure étant synchronisés dans le temps (10) avec un état caractéristique du moteur à combustion interne ou la capture de signaux de mesure étant déclenchée dans le temps, les signaux de mesure déclenchés ou synchronisés dans le temps étant décodés en données de mesure (11), les données de mesure décodées étant soumises à une transformation de signal (12), un ou plusieurs spectrogrammes (13) étant créés à partir de la transformation de signal, le ou les spectrogrammes (13) étant évalués par un ou plusieurs modèles mathématiques de régression (14) dans l'électronique d'évaluation (3), un modèle de régression (14) caractérisant le modèle sous-jacent dans le bruit de structure de sorte qu'une mesure de l'état d'usure soit déterminée à partir des caractéristiques sélectionnées d'un spectrogramme (13), et en même temps l'autorisation du diagnostic de l'état d'usure des composants du moteur à combustion interne étant à nouveau vérifiée (7), lorsque l'autorisation (8) est accordée, le processus se poursuit en commençant par la capture de signaux (9) par le ou les capteurs de bruit de structure (2) jusqu'à l'expiration de l'autorisation, une valeur moyenne étant formée à partir des évaluations ainsi générées (16) de sorte que ladite valeur moyenne représente une mesure de l'usure du composant analysé, cette valeur moyenne étant transmise à d'autres unités (18) qui la traiteront ultérieurement.

2. Procédé selon la revendication 1, **caractérisé en ce que** les composants du moteur à combustion interne comprennent notamment une commande de soupapes et/ou des pistons et/ou des paliers et/ou des soupapes d'injection et/ou des turbocompresseurs.

3. Procédé selon la revendication 1 ou 2, **caractérisé en ce que** l'autorisation de diagnostic de l'état d'usure de composants du moteur à combustion interne inclut une vitesse de rotation et/ou un couple et/ou une vitesse et/ou une température du fluide et/ou le nombre des cycles de travail du procédé qui se sont directement succédés.

4. Procédé selon l'une des revendications précédentes, **caractérisé en ce que** la position du capteur de bruit de structure (2) est optimisée à une distance minimale par rapport au ou aux composants à analyser et **en ce que** l'orientation axiale du capteur de bruit de structure (2) est approchée de la direction préférentielle de propagation des vibrations.

5. Procédé selon l'une des revendications précédentes, **caractérisé en ce que** le capteur de bruit de structure (2) est un capteur de cliquetis.

6. Procédé selon l'une des revendications précédentes, **caractérisé en ce que** l'état caractéristique du moteur à combustion interne pour la synchronisation (10) des signaux de mesure est un angle de vilebrequin.

7. Procédé selon l'une des revendications précédentes, **caractérisé en ce que** la transformation de signal (12) est une analyse de Fourier.

8. Procédé selon l'une des revendications précédentes, **caractérisé en ce que** le paramétrage du modèle de régression (14), auquel des données de mesure sont comparées et dont l'évaluation est faite en tant que mesure de l'état d'usure, est optimisé par apprentissage automatique, un modèle de régression (14) étant utilisé sur la base d'une machine à vecteurs de support pour l'apprentissage automatique.

9. Procédé selon l'une des revendications précédentes, **caractérisé en ce que** l'état d'usure est un jeu et/ou une précision dimensionnelle et/ou une stabilité de forme et/ou une qualité de surface et/ou une fonctionnalité.

10. Procédé selon l'une des revendications précédentes, **caractérisé en ce que** d'autres unités, auxquelles la valeur moyenne (16) est transmise, incluent un équipement de commande (21) du moteur à combustion interne, sur lequel ladite valeur moyenne est traitée comme grandeurs d'entrée dans d'autres fonctions, et un serveur central (19) sur lequel un historique d'usure et de maintenance est créé et/ou une évaluation statistique du parc de moteurs à combustion interne identiques est développée et/ou une planification d'une maintenance spécifique est réalisée et/ou une coordination de ressources est planifiée.
